# EUROPEAN PATENT APPLICATION

(11) **EP 1 686 161 A1**
(43) Date of publication of application: **02.08.2006**
(21) Application number: 04791381.9
(22) Date of filing: 22.10.2004
(51) Int. Cl.: C09D 11/04

(54) **METHOD FOR THE PRODUCTION OF A SOLID PRINTING INK AND SOLID PRINTING INK THUS PRODUCED**

(30) Priority: 22.10.2003 ES 200302463
(71) Applicant: Chimigraf Iberica, S.L., 08191 Rubi (ES)
(72) Inventor: LOPEZ MUNOZ, Antonio, E-08191 RUBI (ES)
(74) Representative: Manresa Val, Manuel
(86) International application number: PCT/ES2004/000462
(87) International publication number: WO 2005/037939

(57) **Abstract**

The invention relates to a method for the production of a solid printing ink and to the solid printing ink thus produced. The inventive method comprises: a first phase in which at least one pigment is mixed with at least one soy protein and at least one dispersant, such as to form a solid mass; a second phase in which a solvent is added to the solid mass from the first phase, in order to produce a homogeneous paste; a third phase in which the resulting product from the second phase is ground to produce a suitable colour yield; a fourth phase in which the homogeneous paste obtained in the third phase is dried, such that the solvent evaporates; and a fifth phase in which the resulting product from the fourth phase is triturated, thereby producing dry fragments or chips.

## Description

Method for the production of a solid printing ink and to a solid printing ink thus produced comprising a first stage in which at least one pigment is mixed with at least one soya protein and with at least one dispersing agent, forming a solid paste, a second stage in which a solvent is added to the mass from the first stage in order to obtain an homogeneous mass, a third stage in which the product resulting from the second stage is ground until a suitable performance of colour is obtained, a fourth stage in which the homogeneous paste obtained in the third stage is dried, with the solvent evaporating, and a fifth stage in which the product resulting from the fourth stage is ground, providing dry pieces or chips.

### BACKGROUND OF THE INVENTION

Since the middle of the 20^{th} century, prints have been used on so-called decorative paper which were intended initially for producing laminates or stratified plastics known as Formica.

The papers printed for this purpose had to have properties that were appropriate for the subsequent treatment to which they were subjected, basically they had to be impregnable with melamine resins and withstand, without apparently modifying their colour and stability, temperatures exceeding 160°C during the permanence time in high pressure (70 Kg/cm²) hot presses when the laminate or stratified plastic was produced.

The technology at the time had not yet developed appropriate binding agents to be used in these conditions and that were exclusively water based, using mixtures of solvents containing alcohol; the non-desired effects of these binding agent-solvent systems did not modify the superficial appearance of the laminate because an overlay was used.

The so-called overlay is a very low weight α-pure cellulose paper, which once impregnated and pressed on to the printed decorative paper, turns completely transparent, forming a barrier, which as well as providing a supplementary amount of polymerised resin, acts as a barrier between the decorative paper print and the surface of the pressed matter.

It was from the 1970's, when the appearance of the so-called low pressure melamine resins required a greater resin content in printed decorative papers, and the overlay disappeared, and the use of low pressure (20 Kg/cm²) quick drying resins was introduced.

This was possible thanks to the use of inks having a binding system that almost exclusively used water as the solvent and which allowed the ink to dry without forming a film that prevented the resin from penetrating inside the absorbent paper used as a support.

Up until the present day, the inks for such a special use, have been based on casein-based binding agents.

Generally, this is a binding agent made up of casein treated with an amine which cross-links upon drying, leaving the surface porosity similar to that of the support paper, thereby allowing the resin to penetrate the whole printed decorative surface in a uniform manner.

These water-based inks are always available in liquid format, generally with a viscosity similar to that of the inks used in rotogravure or at least concentrated inks, to such a viscosity that they can be diluted at a proportion of 50:50, but always with a large proportion of water.

As casein is an organic, natural product, the stability of these liquid inks is affected by possible bacterial contamination particularly in warm climates and generally under normal storage conditions.

Moreover, plastic containers have to be used to transport them, which raise known environmental problems in their elimination process when it is not economically viable to return them.

All this led to thinking of the possibility of these inks being available in a solid form or as chips, to overcome the above-mentioned drawbacks and reduce transport costs, particularly over long distances.

At present other solid printing inks exist that are available in the form of chips of soluble powders, but owing to the characteristics of the binding agents used in these inks, they cannot be converted into liquid, water-based inks suitable for the application described above.

### BRIEF DESCRIPTION OF THE PATENT APPLICATION

This patent of invention is a great development in the ink sector, since it proposes a new ecological, dry, easy to transport, economical ink that is easy to dissolve in water.

The main advantage of this invention is the fact that it works by dry means, in other words, it works with a dry product, without water, which increases its durability.

This is due to the fact that the protein derivatives are very easily attacked by bacteria, whereby as it is a dry product, it is virtually invulnerable to any bacterial attack on the proteins.

In addition, the inventor has ascertained that the product dissolves very easily in water, the cheapest universal solvent.

It is also an environmentally friendly solid ink because it does not contain fungicides, since as indicated above, said ink it not affected by bacterial attacks, and therefore it is not necessary to use said fungicides.

Being a dry product, this ink provides an important saving in transport, because it can be stored and transported very easily in simple containers.

The inks' toxicity level is zero and neither does it contain preservatives, making it the ideal product for industry, since there is no risk of possible intoxication.

### CONCRETE EMBODIMENT OF THE PATENT APPLICATION

In this particular embodiment, the method to follow for the production of a solid printing ink comprises the following stages:
In a first stage at least one pigment is mixed with at least one soya protein and with at least one dispersing agent, forming a solid mass.
In a second stage a solvent is added to the mass from the first stage in order to obtain an homogeneous paste; this solvent can be water, the universal solvent *par excellence,* or a polar solvent such as for example ethyl acetate.
In a third stage the product resulting from the second stage is ground until a suitable pigment performance is obtained. The grinding, in this third stage, is done by a two-cylinder mill, that has a greater capacity since both cylinders rotate at different revolutions, enabling the dry product to be ground and mixed better.
Once the paste from the third stage has been refined, in a fourth stage, it is dried until the added solvent evaporates.
Later, in a fifth stage, the product resulting from the fourth stage is ground until small, dry, irregular shaped pieces (chips) are obtained.
When it is necessary to store this end product, in other words, the dry pieces or chips, they can be placed in containers, making it easier to transport and store them, as it is a dry product.
In a sixth stage these small, irregular pieces (chips) are dissolved until the suitable proportion of solids is obtained and the necessary viscosity for the required application of the liquid ink. The solvent used throughout this stage is preferably water.

The proportions used in the first stage are as follows: the soya protein is in an overall proportion of approximately between 20 and 45%, the pigment is in an overall proportion of approximately between 40 and 75% and the dispersing agent is in an overall proportion of approximately 5%.

It is important to note that in the third stage, when the solvent evaporates from the paste, it is possible that there may be some solvent remains in said paste, whereby the appropriate measurements must be made to check the dried total thereof.

The resulting product from the fifth stage, which consists of a dried mass or solid printing ink, is made up of dry pieces or chips containing at least one pigment, at least one soya protein, and at least one dispersing agent. It is also possible to find the remains of at least one solvent.

In view of the components known today, the inventor has observed that the main components of solid ink are found in the following proportions: the soya protein is in an overall proportion of approximately between 20 and 45%, the pigment is in an overall proportion of approximately between 40 and 75% and the dispersing agent is in an overall proportion of approximately 5%.

It is necessary to indicate that the essential component is the soya protein, which provides the dry ink with the advantages indicated above in the BRIEF DESCRIPTION OF THE PATENT APPLICATION, particularly, with regard to durability, the fact that preservatives are not needed and the absence of toxicity.

In order to obtain the suitable proportions of pigment and binding agent in the solid ink, the dry mass is worked into a paste with a solvent. This solvent can be water, the universal solvent *par excellence,* or a polar solvent, although it is possible to combine water with a polar solvent, such as, for example, ethyl acetate.

Purely as an example, in order to obtain a white coloured, solid ink, the following proportions and components are to be adopted for the dry mass:
- Soya protein 25%
- White pigment 70%
- Dispersing agent 5%

The water that would be used to obtain the definitive liquid ink will depend on the white tone to be obtained: the greater the viscosity and concentration, the less the water content, and the less the viscosity and concentration, the greater the water content.

In another embodiment, for example, for obtaining a yellow coloured ink, the following proportions could be used:
- Soya protein 35%
- Yellow pigment 60%
- Dispersing agent 5%

In this case, the water that is needed, as in the previous example, to obtain the definitive liquid ink would depend on the yellow tone to be obtained: the greater the viscosity and concentration, the less the water content, and the less the viscosity and concentration, the greater the water content.

This patent of invention describes a new method for the production of a solid printing ink and a printing ink thus produced. The examples mentioned herein do not limit this invention, and therefore it could have different applications and/or adaptations, all included in the scope of the following claims.

## Claims

1. Method for the production of a solid printing ink comprising:
- a first stage in which at least one pigment is mixed with at least one soya protein and with at least one dispersing agent, forming a solid mass,
- a second stage in which a solvent is added to the solid mass from the first stage in order to obtain an homogeneous paste,
- a third stage in which the product resulting from the second stage is ground until a suitable colour performance is obtained,
- a fourth stage in which the homogeneous paste obtained in the third stage is dried, with the solvent evaporating, and
- a fifth stage in which the product resulting from the fourth stage is ground, providing dry pieces or chips.

2. Method according to claim 1, **characterised in that** there is a sixth stage in which the dry pieces or chips are dissolved in a solvent until, in the appropriate proportion, the viscosity and concentration necessary for the required application of the liquid ink are obtained.

3. Method according to claim 1, **characterised in that** the grinding in the third stage is done by a two-cylinder mill.

4. Method according to claim 1, **characterised in that** before the fourth stage, the paste obtained in the third stage is refined so that it can later pass on to the fourth stage.

5. Method according to claim 1 or 2, **characterised in that** the solvent is water.

6. Method according to claim 1 or 2, **characterised in that** the solvent can be a polar solvent.

7. Method according to at least one of the preceding claims from 1 to 6, **characterised in that** the soya protein is in an overall proportion of approximately between 20 and 45%, the pigment is in an overall proportion of approximately between 40 and 75% and the dispersing agent is in an overall proportion of approximately 5%.

8. Method according to claim 6, **characterised in that** in the fourth stage, when the product resulting from the second stage is drying and the polar solvent is evaporating from the homogeneous paste, some remains of the said solvent remain in the homogeneous dry mass.

9. Solid printing ink according to the method indicated above, **characterised in that** it is made up of some dry pieces or chips with the following components:
- at least one pigment,
- at least one soya protein, and
- at least one dispersing agent.

10. Solid printing ink according to claim 9, **characterised in that** the components indicated in the previous claim are in the following proportions: the soya protein is in an overall proportion of approximately between 20 and 45%, the pigment is in an overall proportion of approximately between 40 and 75% and the dispersing agent is in an overall proportion of approximately 5%.

11. Solid printing ink according to claim 9 or 10, **characterised in that** there are no noticeable remains of at least one solvent in the dry pieces or chips.

12. Solid printing ink according to claim 10 or 11, **characterised in that** the said dry pieces or chips are dissolved in a solvent, in order to obtain the liquid ink suitable for its application.

13. Solid printing ink according to claim 12, **characterised in that** the said solvent is water.

14. Solid printing ink according to claim 13, **characterised in that** the said dry pieces or chips can be dissolved also in a polar solvent.
